# EUROPEAN PATENT APPLICATION

(11) **EP 4 830 974 A1**
(43) Date of publication of application: **28.10.2026**
(21) Application number: 25853905.5
(22) Date of filing: 11.08.2025
(51) Int. Cl.: B60L 3/00, B60L 58/10

(54) **BATTERY MANAGEMENT SYSTEM AND BATTERY MANAGEMENT METHOD**

(30) Priority: 14.08.2024 CN 202411114366
(71) Applicant: Chery Automobile Co., Ltd., Wuhu, Anhui 241006 (CN)
(72) Inventor: WANG, Yutao, Wuhu, Anhui 241006 (CN); CHENG, Lin, Wuhu, Anhui 241006 (CN); GU, Jiaying, Wuhu, Anhui 241006 (CN); JIA, Fengtao, Wuhu, Anhui 241006 (CN); WANG, Dali, Wuhu, Anhui 241006 (CN)
(74) Representative: Adamson Jones
(86) International application number: PCT/CN2025/113858
(87) International publication number: WO 2026/037242

(57) **Abstract**

A battery management system, comprising a low-voltage battery (1), a detection component (2), a controller (3), a memory (4), a charging switch (5), and a discharging switch (6). The controller (3) is separately electrically connected to the detection component (2), the memory (4), the charging switch (5), and the discharging switch (6). The controller (3) is used for: storing received state information in the memory (4); when the state information satisfies a target state condition, determining fault information on the basis of the state information satisfying the state condition; storing the fault information in the memory (4); and, on the basis of the fault information, controlling the charging switch (5) and/or the discharging switch (6). An independent memory is added to the system, which can better assist maintenance personnel in more comprehensively determining a faulty component. Further disclosed is a battery management method.

## Description

The present disclosure claims priority to the Chinese Patent Application No. 202411114366.1, filed on August 14, 2024, and entitled "BATTERY MANAGEMENT SYSTEM AND BATTERY MANAGEMENT METHOD," the disclosure of which is incorporated herein by reference in its entirety.

### TECHNICAL FIELD

The present disclosure relates to the technical field of electric vehicles, and particularly to a battery management system and a battery management method.

### BACKGROUND

Electric vehicles have both low-voltage and high-voltage batteries. The low-voltage battery can supply power to low-voltage electrical devices inside the vehicle, while the high-voltage battery can charge the low-voltage battery. When a fault occurs in the low-voltage battery, it is necessary to stop the charging and discharging of the low-voltage battery.

In the related art, the controller monitors relevant parameters of the low-voltage battery in real time, analyzes fault information of the low-voltage battery and stores the fault information in its built-in cache of the controller, and controls charging and discharging switches of the low-voltage battery based on the currently stored fault information. At the same time, the controller sends a prompt signal (e.g., through a fault indicator light) to the user. After a fault occurs, the user may take the vehicle for maintenance, and the maintenance personnel will determine the faulty component based on the fault information in the cache, combined with their own experience, and then proceed with the repair.

The space of the built-in cache of the controller is limited, thus when new fault information needs to be stored, the old fault information will be overwritten with the new fault information. However, it is difficult to accurately locate all faulty components based solely on the latest fault information. For example, if multiple faults have occurred before the vehicle is sent for repair, involving different components, only the latest faulty component can be identified currently.

### SUMMARY

The present disclosure provides a battery management system and a battery management method, which can solve the above technical problems existing in the related art. The technical solution is as follows.

In a first aspect, a battery management system is provided, which includes a low-voltage battery, a detection component, a controller, a memory, a charging switch, and a discharging switch. The detection component is electrically connected to the low-voltage battery and the controller, and is configured to detect the state information of the low-voltage battery and send the state information to the controller, where the state information includes current, voltage, and cell temperature. The charging switch is configured to selectively electrically connect the low-voltage battery and a high-voltage battery. The discharging switch is configured to selectively electrically connect the low-voltage battery and a low-voltage load. The controller is electrically connected to the detection component, the memory, the charging switch, and the discharging switch. The controller is configured to: store the received state information in the memory; in response to the state information satisfying a target state condition, determine fault information based on the state information satisfying the target state condition; store the fault information into the memory; and control the charging switch and/or the discharging switch based on the fault information.

In a possible implementation, the controller includes a control chip and a driver chip. The control chip is electrically connected to the driver chip and the detection component, and is configured to: store the received state information into the memory; in response to the state information satisfying the target state condition, determine the fault information based on the state information satisfying the target state condition; store the fault information into the memory; determine a control instruction based on the fault information; and send the control instruction to the driver chip. The driver chip is electrically connected to the charging switch and the discharging switch, and is configured to control the charging switch and/or the discharging switch based on the control instruction.

In a possible implementation, the controller is configured to: in response to the currently received state information satisfying the target state condition present in a first correspondence between pre-stored state conditions, state information ranges, and fault levels, determine, from the first correspondence, a target fault level corresponding to both the target state condition and a target state information range within which the currently received state information falls; determine, based on a pre-stored second correspondence between the state conditions and fault types, a target fault type corresponding to the target state condition; and determine the target fault type and the target fault level as the fault information.

In a possible implementation, the controller is configured to: in response to the target state condition being that a discharging current is greater than a first discharging current threshold, determine the corresponding target fault type to be a short-circuit fault; in response to the target state condition being that a total battery voltage is less than a total voltage threshold, determine the corresponding target fault type to be an under-voltage fault; in response to the target state condition being that a cell voltage is greater than a cell voltage threshold, determine the corresponding target fault type to be an over-voltage fault; in response to the target state condition being that the charging current is greater than a charging current threshold, determine the corresponding target fault type to be a charging overcurrent fault; in response to the target state condition being that the discharging current is greater than a second discharging current threshold, determine the corresponding target fault type to be a discharging overcurrent fault, where the second discharging current threshold is less than the first discharging current threshold; in response to the target state condition being that a cell temperature is greater than a cell temperature threshold, determine the corresponding target fault type to be an over-temperature fault; and in response to the target state condition being that the cell temperature is greater than the cell temperature threshold and a temperature increase rate is continuously greater than a temperature increase rate threshold for a target duration, determine the corresponding target fault type to be a thermal runaway fault.

In a possible implementation, the controller is configured to: in response to the currently received state information satisfying the target state condition present in the first correspondence between the pre-stored state conditions, state information ranges, fault levels, and detection durations, determine, from the first correspondence, the target fault level and a target detection duration that correspond to both the target state condition and the target state information range within which the currently received state information falls, where in the first correspondence, the fault level is negatively correlated with the target detection duration; and in response to the state information received throughout the target detection duration satisfying the target state condition, determine the target fault type corresponding to the target state condition based on the pre-stored second correspondence between the state conditions and the fault types.

In a possible implementation, the controller is configured to: based on a third correspondence between the fault types and control instructions, determine a target control instruction corresponding to the target fault type, and control the charging switch and/or the discharging switch based on the target control instruction.

In a possible implementation, the fault types include an under-voltage fault, a short-circuit fault, an over-voltage fault, a charging overcurrent fault, a discharging overcurrent fault, an over-temperature fault, and a thermal runaway fault. The controller is configured to: in response to the target fault type being the under-voltage fault, determine that the target control instruction is to open the discharging switch; in response to the target fault type being the short-circuit fault, determine that the target control instruction is to open both the charging switch and the discharging switch; in response to the target fault type being the over-voltage fault, determine that the target control instruction is to open the charging switch; in response to the target fault type being the charging overcurrent fault, determine that the target control instruction is to open the charging switch; in response to the target fault type being the discharging overcurrent fault, determine that the target control instruction is to open the discharging switch; and in response to the target fault type being the over-temperature fault or the thermal runaway fault, determine that the target control instruction is to open both the charging switch and the discharging switch.

In a possible implementation, the controller is configured to: in response to the target fault type being the over-temperature fault or the thermal runaway fault, and both the charging switch and the discharging switch being closed, determine a current value of a connection line between the high-voltage battery and the low-voltage battery, and a current value of a connection line between a low-voltage load and the low-voltage battery; in response to the current value of the connection line between the high-voltage battery and the low-voltage battery being greater than a first current threshold, determine that the target control instruction includes opening the charging switch; in response to the current value of the connection line between the low-voltage load and the low-voltage battery being greater than a second current threshold, determine that the target control instruction includes opening the discharging switch; and in response to one of the charging switch and the discharging switch being closed, determine that the target control instruction is to open the switch that is closed.

In a possible implementation, the controller is configured to: in response to the target fault type being the over-temperature fault or the thermal runaway fault, and both the charging switch and the discharging switch being closed, determine that the target control instruction is to open the discharging switch; after the target control instruction is executed, in response to the received state information being not detected to satisfy the target state condition, maintain the switch state unchanged; in response to the received state information being detected to satisfy the target state condition again, re-determine the target control instruction to be to close the discharging switch and open the charging switch; after the target control instruction is executed, in response to the received state information being not detected to satisfy the target state condition, maintain the switch state unchanged; in response to the received state information being detected to satisfy the target state condition again, re-determine the target control instruction to be to open both the charging switch and the discharging switch; and in response to one of the charging switch and the discharging switch being closed, determine that the target control instruction is to open the switch that is closed.

In a possible implementation, the battery management system further includes a communication component and a fault indicator light. The communication component is electrically connected to the controller and the fault indicator light. The controller is further configured to: in response to the state information satisfying the target state condition, send a target indication signal to the fault indicator light through the communication component, so that the fault indicator light emits a light signal based on the target indication signal.

In a second aspect, a battery management method is provided, which is applied to a battery management system. The battery management system includes a low-voltage battery, a detection component, a controller, a memory, a charging switch, and a discharging switch. The method includes: detecting, by the detection component, state information of the low-voltage battery; and sending, by the detection component, the state information to the controller, where the state information includes current, voltage, and cell temperature; and storing, by the controller, the received state information into the memory; in response to the state information satisfying a target state condition, determining, by the controller, fault information based on the state information satisfying the target state condition; storing, by the controller, the fault information into the memory; and controlling, by the controller, the charging switch and/or discharging switch based on the fault information.

In a possible implementation, in response to the state information satisfying the target state condition, determining, by the controller, the fault information based on the state information satisfying the state condition includes: in response to the currently received state information satisfying the target state condition present in a first correspondence between pre-stored state conditions, state information ranges, and fault levels, determining, from the first correspondence, a target fault level corresponding to both the target state condition and a target state information range within which the currently received state information falls; based on a pre-stored second correspondence between the state conditions and fault types, determining a target fault type corresponding to the target state condition; and determining the target fault type and the target fault level as the fault information.

In a possible implementation, based on the pre-stored second correspondence between the state conditions and the fault types, determining the target fault type corresponding to the target state condition includes: in response to the target state condition being that a discharging current is greater than a first discharging current threshold, determining the corresponding target fault type to be a short-circuit fault; in response to the target state condition being that a total battery voltage is less than a total voltage threshold, determining the corresponding target fault type to be an under-voltage fault; in response to the target state condition being that a cell voltage is greater than a cell voltage threshold, determining the corresponding target fault type to be an over-voltage fault; in response to the target state condition being that the charging current is greater than a charging current threshold, determining the corresponding target fault type to be a charging overcurrent fault; in response to the target state condition being that the discharging current is greater than a second discharging current threshold, determining the corresponding target fault type to be a discharging overcurrent fault, where the second discharging current threshold is less than the first discharging current threshold; in response to the target state condition being that a cell temperature is greater than a cell temperature threshold, determining the corresponding target fault type to be an over-temperature fault; and in response to the target state condition being that the cell temperature is greater than the cell temperature threshold and a temperature increase rate is continuously greater than a temperature increase rate threshold for a target duration, determining the corresponding target fault type to be a thermal runaway fault.

In a possible implementation, in response to the currently received state information satisfying the target state condition present in a first correspondence between pre-stored state conditions, state information ranges, and fault levels, determining, from the first correspondence, a target fault level corresponding to both the target state condition and a target state information range within which the currently received state information falls, includes: in response to the currently received state information satisfying the target state condition present in the first correspondence between the pre-stored state conditions, state information ranges, fault levels, and detection durations, determining, from the first correspondence, the target fault level and a target detection duration that correspond to both the target state condition and the target state information range within which the currently received state information falls, where in the first correspondence, the fault level is negatively correlated with the target detection duration. Determining, based on the pre-stored second correspondence between the state conditions and fault types, the target fault type corresponding to the target state condition, includes: in response to the state information received throughout the target detection duration satisfying the target state condition, determining the target fault type corresponding to the target state condition based on the pre-stored second correspondence between the state conditions and the fault types.

In a possible implementation, controlling, by the controller, the charging switch and/or the discharging switch based on the fault information includes: based on a third correspondence between the fault types and control instructions, determining a target control instruction corresponding to the target fault type, and controlling the charging switch and/or the discharging switch based on the target control instruction.

In a possible implementation, the fault types include an under-voltage fault, a short-circuit fault, an over-voltage fault, a charging overcurrent fault, a discharging overcurrent fault, an over-temperature fault, and a thermal runaway fault. Based on a third correspondence between the fault types and the control instructions, determining the target control instruction corresponding to the target fault type, includes: in response to the target fault type being the under-voltage fault, determining that the target control instruction is to open the discharging switch; in response to the target fault type being the short-circuit fault, determining that the target control instruction is to open both the charging switch and the discharging switch; in response to the target fault type being the over-voltage fault, determining that the target control instruction is to open the charging switch; in response to the target fault type being the charging overcurrent fault, determining that the target control instruction is to open the charging switch; in response to the target fault type being the discharging overcurrent fault, determining that the target control instruction is to open the discharging switch; and in response to the target fault type being the over-temperature fault or the thermal runaway fault, determining that the target control instruction is to open both the charging switch and the discharging switch.

In a possible implementation, the battery management system further includes a communication component and a fault indicator light, and the method further includes: in response to the state information satisfying the target state condition, sending a target indication signal to the fault indicator light via the communication component to cause the fault indicator light to emit a light signal based on the target indication signal.

In the present disclosure, an independent memory is added, and the storage space of the independent memory may be much larger than the built-in cache of the controller. In this way, the memory can store the fault information corresponding to multiple faults of the low-voltage battery within a period of time, and the state information of the low-voltage battery within this period. During the fault maintenance process, this information can better assist the maintenance personnel in comprehensively identifying each faulty component.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without inventive effort.
FIG. 1 is a schematic diagram of a location of a battery management system provided in some embodiments of the present disclosure;
FIG. 2 is a schematic structural diagram of a battery management system according to some embodiments of the present disclosure;
FIG. 3 is a schematic structural diagram of a controller according to some embodiments of the present disclosure;
FIG. 4 is a schematic structural diagram of a control chip according to some embodiments of the present disclosure;
FIG. 5 is a schematic structural diagram of a battery management system according to some embodiments of the present disclosure;
FIG. 6 is a schematic flowchart illustrating a process of determining a control instruction according to some embodiments of the present disclosure;
FIG. 7 is a schematic structural diagram of a battery management system according to some embodiments of the present disclosure.

### Reference numerals:

1. Low-voltage battery;
2. Detection components;
3. Controller, 31. Control chip, 32. Driver chip, 33. Anti-interference chip;
4. Memory;
5. Charging switch;
6. Discharging switch;
7. Communication component;
8. Fault indicator light.

### DETAILED DESCRIPTION

For clearer descriptions of the objectives, technical solutions, and advantages of the present disclosure, embodiments of the present disclosure are further described in detail hereinafter with reference to the accompanying drawings.

Electric vehicles have both low-voltage and high-voltage batteries. The low-voltage battery can supply power to low-voltage electrical devices inside the vehicle, while the high-voltage battery can charge the low-voltage battery. When a fault occurs in the low-voltage battery, it is necessary to stop the charging and discharging of the low-voltage battery. In the related art, the controller monitors relevant parameters of the low-voltage battery in real time, analyzes the fault information of the low-voltage battery and stores the fault information in its built-in cache, and controls charging and discharging switches of the low-voltage battery based on the currently stored fault information. After a fault occurs, maintenance personnel will determine the faulty component based on the fault information in the cache, combined with their own experience, and then proceed with the repair. The space of the built-in cache of the controller is limited, thus when new fault information needs to be stored, the old fault information will be overwritten with the new fault information. However, it is difficult to accurately locate all faulty components based solely on the latest fault information. For example, if multiple faults have occurred before the vehicle is sent for repair, involving different components, only the latest faulty component can be identified currently.

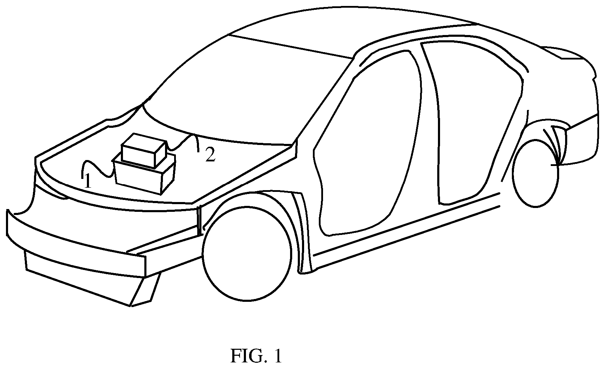

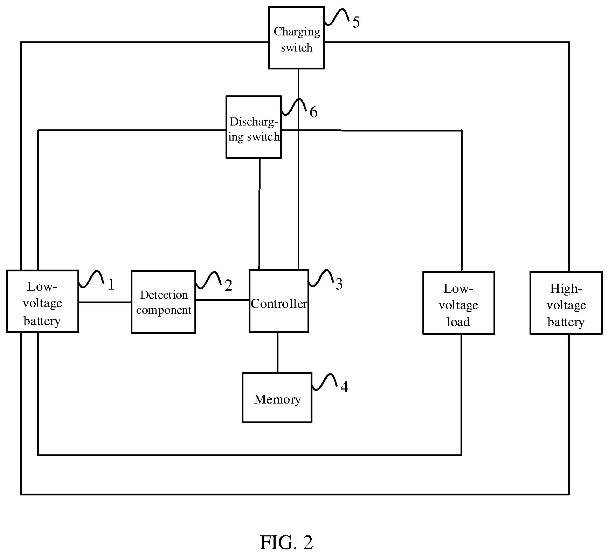

To address the aforementioned problems, the present disclosure provides a battery management system, which is applied to vehicles. As shown in FIG. 1, the battery management system includes a low-voltage battery 1, a detection component 2, a controller 3 (not shown in FIG. 1), a memory 4 (not shown in FIG. 1), a charging switch 5 (not shown in FIG. 1), and a discharging switch 6 (not shown in FIG. 1). The low-voltage battery 1 is disposed in the engine compartment of the vehicle, and each of the detection component 2, controller 3, memory 4, charging switch 5, and discharging switch 6 is mounted in the vicinity of the low-voltage battery 1. For example, the arrangement of the components of the battery management system in the vehicle may be referred to FIG. 1, and the controller 3, memory 4, charging switch 5, and discharging switch 6 are arranged close to the detection component 2 in FIG. 1. The detection component 2 is electrically connected to the low-voltage battery 1 and the controller 3, and is configured to detect state information of the low-voltage battery 1 and send the state information to the controller 3, where the state information includes current, voltage, and cell temperature. The detection component 2 can detect the state information of the low-voltage battery 1 in real time or periodically. The detection period may be preset by a technician, for example, set to 10 milliseconds. The detection component 2 may include a current sensor, a voltage sensor, a temperature sensor, etc. The current sensor can detect a discharging current and a charging current, the voltage sensor can detect a total battery voltage and a cell voltage, and the temperature sensor can detect a cell temperature. The charging switch 5 is configured to selectively electrically connect the low-voltage battery 1 and a high-voltage battery electrically connected to the low-voltage battery 1. When the remaining power ratio of the low-voltage battery 1 is below a threshold, the high-voltage battery can charge the low-voltage battery 1. The discharging switch 6 is configured to selectively electrically connect the low-voltage battery 1 and a low-voltage load. The vehicle has a plurality of low-voltage loads, such as speakers, instrument displays, etc., and the low-voltage battery 1 is electrically connected to the plurality of low-voltage loads. When the user activates a low-voltage load, the low-voltage battery 1 can supply power to the low-voltage load. The controller 3 is electrically connected to the detection component 2, the memory 4, the charging switch 5, and the discharging switch 6, as shown in FIG. 2. The controller 3 is configured to: store the received state information in the memory 4; in response to the state information satisfying a target state condition, determine the fault information based on the state information that satisfies the state condition, store the fault information into the memory 4, and control the charging switch 5 and/or the discharging switch 6 based on the fault information.

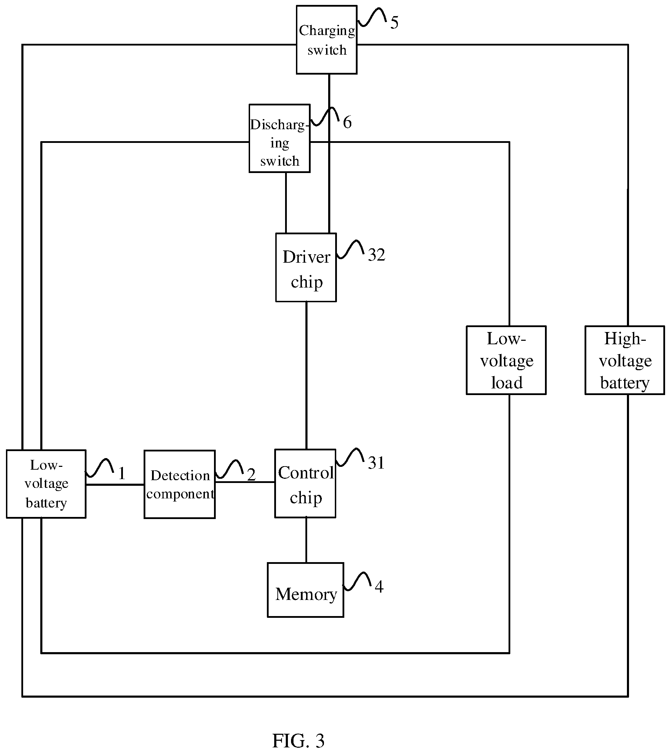

In a possible implementation, as shown in FIG. 3, the controller 3 includes a control chip 31 and a driver chip 32. The control chip 31 is electrically connected to the driver chip 32, the detection component 2, and the memory 4. The control chip 31 is configured to: store the received state information into the memory 4, in response to the state information satisfying the target state condition, determine the fault information based on the state information that satisfies the target state conditions, and store the fault information into the memory 4; determine a control instruction based on the fault information and send the control instruction to the driver chip 32. The driver chip 32 is electrically connected to the charging switch 5 and the discharging switch 6. The driver chip 32 is configured to control the charging switch 5 and/or the discharging switch 6 based on the control instruction.

The control chip 31 can perform various calculations, receive and store collected data, etc.

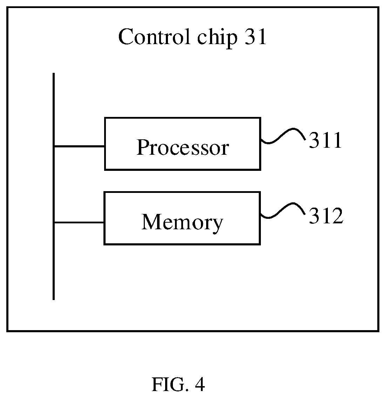

The control chip 31 may include a processor 311 and a memory 312, as shown in FIG. 4.

The processor 311 may be a central processing unit (CPU) or a system on chip (SoC), etc. The processor 311 may be configured to process various operation instructions, such as determining whether the received state information satisfies the state conditions.

The memory 312 may include various volatile or non-volatile memories, such as solid state disks (SSDs) and dynamic random access memories (DRAMs). The memory 312 may be configured to store initial data, intermediate data, and result data used in a relevant processing procedure, for example, pre-storing a first correspondence between state conditions, state information ranges, and fault levels.

In addition, the control chip 31 may further include a communication module, which is configured to communicating with other devices or components.

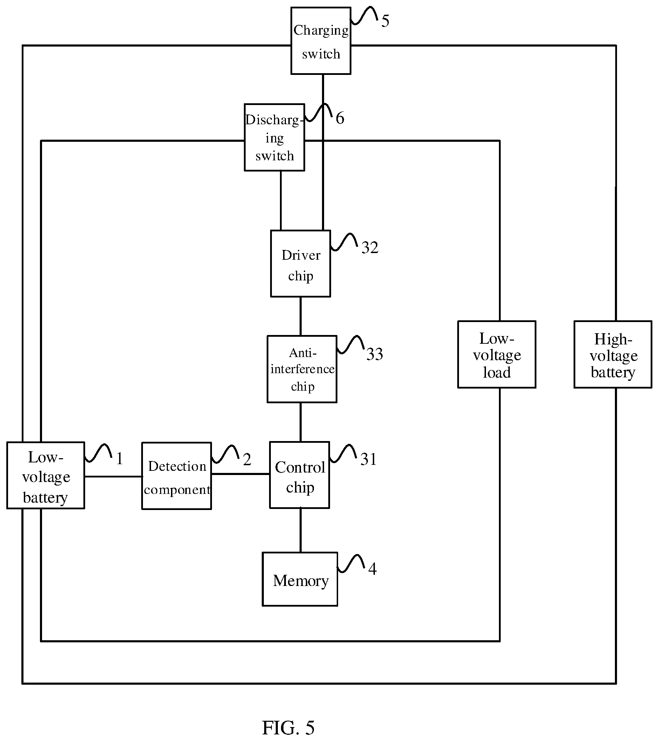

In a possible implementation, an interference signal may exist in the transmission process of the control instruction. The controller 3 may further include an anti-interference chip 33, as shown in FIG. 5. The anti-interference chip 33 is electrically connected to the control chip 31 and the driver chip 3. The anti-interference chip 33 can process the control instruction sent by the control chip 31, removing other interference signals, other than the control instruction, from the signals sent by the control chip 31. The anti-interference chip 33 then sends the processed control instruction to the driver chip 32. Optionally, two anti-interference chips 33 may be provided, one serving as the primary anti-interference chip and the other as the backup anti-interference chip. The control chip 31 sends the control instruction simultaneously to both anti-interference chips 33. After receiving the control instruction, the two anti-interference chips 33 perform anti-interference processing on the control instruction and send the processed control instruction to the driver chip 32. In this way, the anti-interference chip 33 can remove interference signals in the environment and improve the signal quality of the control instruction.

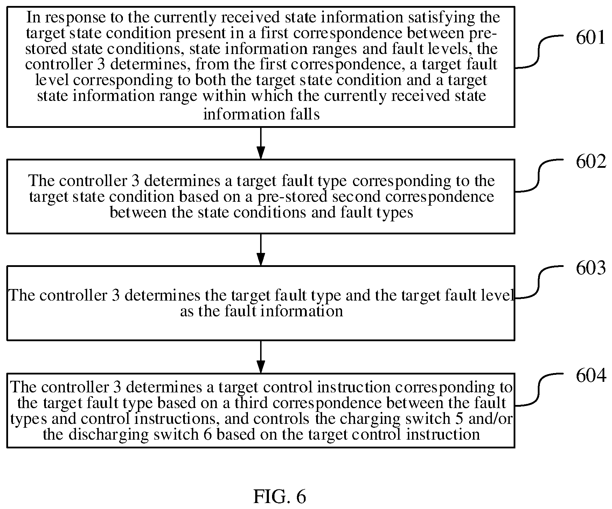

In a possible implementation, a processing flowchart of the control instruction determined by the controller 3 may be as shown in FIG. 6, which includes the following steps.

In 601, in response to the currently received state information satisfying the target state condition present in a first correspondence between pre-stored state conditions, state information ranges and fault levels, the controller 3 determines, from the first correspondence, a target fault level corresponding to both the target state condition and a target state information range within which the currently received state information falls.

The same state condition corresponds to various fault levels, and within the same condition, different state information ranges correspond to different fault levels. For example, the first correspondence between the state conditions, the state information ranges, the fault levels, and the detection durations can be found in Table 1.

**Table 1**

| State condition | State information range | Fault Level | Detection duration |
|---|---|---|---|
| Discharging current greater than 800 A | (800,900] | First level | 500 ms |
| | (900,1000] | Second level | 400 ms |
| | (1000,+∞) | Third estate | 300 ms |
| Total battery voltage less than 6 V | [5,6) | First level | 700 ms |
| | [4,5) | Second level | 600 ms |
| | [0,4) | Third estate | 500 ms |
| Cell voltage greater than 3.9 V | (3.9,4.4] | First level | 700 ms |
| | (4.4,4.9] | Second level | 600 ms |
| | (4.9,+∞) | Third estate | 500 ms |
| Charging current greater than 200 A | (200,210] | First level | 20 s |
| | (210,220] | Second level | 15 s |
| | (220,+∞) | Third estate | 10 s |
| Discharging current greater than 300 A | (300,310] | First level | 20 s |
| | (310,320] | Second level | 15 s |
| | (320,+∞) | Third estate | 10 s |
| Cell temperature higher than 75 °C | (75,80] | First level | 20 s |
| | (80,85] | Second level | 15 s |
| | (85,+∞) | Third estate | 10 s |
| Cell temperature greater than 75 °C and temperature increase rate greater than 3 °C/s for 3 seconds | Cell temperature in (75,80] and temperature increase rate in (3,6] | First level | 10 s |
| | Cell temperature in (80,85] and temperature increase rate in (6,9] | Second level | 7 s |
| | Cell temperature in (85,+∞) and temperature increase rate in (9,+∞) | Third estate | 4 s |

After receiving the state information, the controller 3 compares the state information with the state conditions one by one. When the currently received state information satisfies the target state condition present in the pre-stored first correspondence between the state conditions, the state information ranges, the fault levels and the detection durations, the controller 3 determines the target fault level and the target detection duration corresponding to both the target state condition and the target state information range within which the currently received state information falls from the first correspondence. In the first correspondence, the fault level is negatively correlated with the target detection duration. For example, the charging current in the state information currently received by the controller 3 is 215A, so that the target state condition satisfied is "charging current greater than 200A", then the target state information range determined from the first correspondence is "(210,220]". Accordingly, the corresponding target fault level is the second level, and the target detection duration is 15 seconds.

In 602, the controller 3 determines a target fault type corresponding to the target state condition based on a pre-stored second correspondence between the state conditions and fault types.

If the state information received throughout the target detection duration satisfies the target state condition, then based on the pre-stored second correspondence between the state conditions and the fault types, the target fault type corresponding to the target state conditions is determined.

When the target state condition is that the discharging current is greater than a first discharging current threshold, it is determined that the corresponding target fault type is a short-circuit fault; when the target state condition is that the total battery voltage is less than a total voltage threshold, it is determined that the corresponding target fault type is an under-voltage fault; when the target state condition is that the cell voltage is greater than a cell voltage threshold, it is determined that the corresponding target fault type is an over-voltage fault; when the target state condition is that the charging current is greater than a charging current threshold, it is determined that the corresponding target fault type is a charging overcurrent fault; when the target state condition is that the discharging current is greater than a second discharging current threshold, it is determined that the corresponding target fault type is a discharging overcurrent fault, where the second discharging current threshold is less than the first discharging current threshold; when the target state condition is that the cell temperature is greater than a cell temperature threshold, it is determined that the corresponding target fault type is an over-temperature fault; when the target state condition is that the cell temperature is greater than the cell temperature threshold and the temperature increase rate is continuously greater than a temperature increase rate threshold for the target duration, it is determined that the corresponding target fault type is a thermal runaway fault. For example, the second correspondence between the state conditions and the fault types can be found in Table 2, where different state conditions correspond to different fault types.

**Table 2**

| State condition | Fault Type |
|---|---|
| Discharging current greater than 800 A | Short-circuit |
| Total battery voltage less than 6 V | Under-voltage |
| Cell voltage greater than 3.9 V | Over-voltage |
| Charging current greater than 200 A | Overcurrent charging |
| Discharging current greater than 300 A | Discharging overcurrent |
| Cell temperature higher than 75 °C | Over-temperature |
| The cell temperature greater than 75 °C and temperature increase rate greater than 3 °C/s for 3 seconds | Thermal runaway |

If a second detection duration is present within the first detection duration (the target detection duration), in the first correspondence, the second detection duration and the target state condition both correspond to a second fault level and a second state information range, and the state information received throughout the second detection duration satisfies the second state information range, then when the second detection duration is ended, the first fault type and the second fault level are both determined as the fault information. The fault information is stored in the memory 4, and the charging switch 5 and/or the discharging switch 6 are controlled based on the fault information. Here, the second detection duration is less than the first detection duration (the target detection duration).

In 603, the controller 3 determines the target fault type and the target fault level as the fault information.

The controller 3 sends the fault information to the memory 4 for storage.

In 604, the controller 3 determines a target control instruction corresponding to the target fault type based on a third correspondence between the fault types and control instructions, and controls the charging switch 5 and/or the discharging switch 6 based on the target control instruction.

The third correspondence between the fault types and the control instructions can be found in Table 3.

**Table 3**

| Fault Type | Control Instruction |
|---|---|
| Short-circuit | Open both charging switch 5 and discharging switch 6 |
| Under-voltage | Open discharging switch 6 |
| ...... | ...... |

The fault types include the under-voltage fault, the short-circuit fault, the over-voltage fault, the charging overcurrent fault, the discharging overcurrent fault, the over-temperature fault, and the thermal runaway fault. When the target fault type is the under-voltage fault, the target control instruction is determined to be to open the discharging switch 6. When the target fault type is a short-circuit fault, the target control instruction is determined to be to open both the charging switch 5 and the discharging switch 6. When the target fault type is the over-voltage fault, the target control instruction is determined to be to open the charging switch 5. When the target fault type is the charging overcurrent fault, the target control instruction is determined to be to open the charging switch 5. When the target fault type is the discharging overcurrent fault, the target control instruction is determined to be to open the discharging switch 6.

When the target fault type is the over-temperature fault or the thermal runaway fault, various control logics may be available, which are exemplarily described below.

For a control logic 1, when the target fault type is the over-temperature fault or the thermal runaway fault, it is determined that the target control instruction is to open both the discharging switch 6 and the charging switch 5.

For a control logic 2, when the target fault type is the over-temperature fault or the thermal runaway fault, the target control instruction that corresponds to the current target operating condition and the target fault type of the low-voltage battery 1 is determined based on a fourth correspondence between the operating conditions, the fault types and the control instructions of the low-voltage battery 1. The fourth correspondence can be found in Table 4 below.

**Table 4**

| Operating Condition | Fault Type | Control Instruction |
|---|---|---|
| Both the charging switch 5 and the discharging switch 6 are closed, and a current value of a connection line between the high-voltage battery and the low-voltage battery 1 is greater than a first current threshold | Over-temperature | Open the charging switch 5 |
| Both the charging switch 5 and the discharging switch 6 are closed, and a current value of a connection line between the low-voltage load and the low-voltage battery 1 is greater than a second current threshold | Over-temperature | Open the discharging switch 6 |
| The charging switch 5 is closed, and the | Over-temperature | Open the charging switch 5 |
| discharging switch 6 is open | | |
| ...... | ...... | ...... |

When the target fault type is the over-temperature fault or the thermal runaway fault, both the charging switch 5 and the discharging switch 6 are closed, and the current value of the connection line between the high-voltage battery and the low-voltage battery 1, as well as the current value of the connection line between the low-voltage load and the low-voltage battery 1, are determined. When the current value of the connection line between the high-voltage battery and the low-voltage battery 1 is greater than the first current threshold, it is determined that the target control instruction includes opening the charging switch 5. When the current value of the connection line between the low-voltage load and the low-voltage battery 1 is greater than the second current threshold, it is determined that the target control instruction includes opening the discharging switch 6. When one of the charging switch 5 and the discharging switch 6 is closed, it is determined that the target control instruction is to open the switch that is closed in the charging switch 5 and the discharging switch 6.

Optionally, when the target fault type is the over-temperature fault or the thermal runaway fault, if both the charging switch 5 and the discharging switch 6 are closed, it is determined that the target control instruction is to open the discharging switch 6. After the target control instruction is executed, if it is not detected that the received state information satisfies the target state condition, the switch state are maintained unchanged. If it is detected again that the received state information satisfies the target state condition, it is re-determined that the target control instruction is to close the discharging switch 6 and open the charging switch 5. After the target control instruction is executed, if it is not detected that the received state information satisfies the target state condition, the switch state are maintained unchanged. If it is detected again that the received state information satisfies the target state condition, it is re-determined that the target control instruction is to open both the charging switch 5 and the discharging switch 6. If one of the charging switch 5 and the discharging switch 6 is closed, it is determined that the target control instruction is to open the switch that is closed in the charging switch 5 and the discharging switch 6.

Different fault types correspond to different faulty components. The faulty component corresponding to the under-voltage fault, the over-voltage fault, and the discharge over-current fault is the controller, while the faulty component corresponding to the short-circuit fault is the low-voltage battery (where the spacing between the positive and negative electrodes of the low-voltage battery connected to power consuming devices is too small). The faulty component corresponding to the charging over-current fault, the over-temperature fault, and the thermal runaway fault is the low-voltage battery. The controller 3 can send the state information and the fault information that is stored in the memory 4 and within a specified historical duration to a target device. The specified historical duration may be pre-configured before the vehicle leaves the factory, and the target device displays the state information and the fault information within the specified historical duration. The faulty component may be determined by maintenance personnel, who identify the faulty component based on the state information and the fault information, and the identified faulty component is acquired by the target device. Alternatively, the faulty component may be determined by a machine learning model, where the state information and the fault information within the specified historical duration are input into a faulty component determination model to obtain the faulty component output by the model. The faulty component determination model may be a decision tree model, a convolution neural network, or the like. For example, if the fault type is the thermal runaway fault, the maintenance personnel can look up a table to determine that the corresponding faulty component is the low-voltage battery. Then, based on cell temperatures of a plurality of low-voltage batteries sampled in the state information, it can be further determined that a fault occurs in the low-voltage battery with the highest cell temperature.

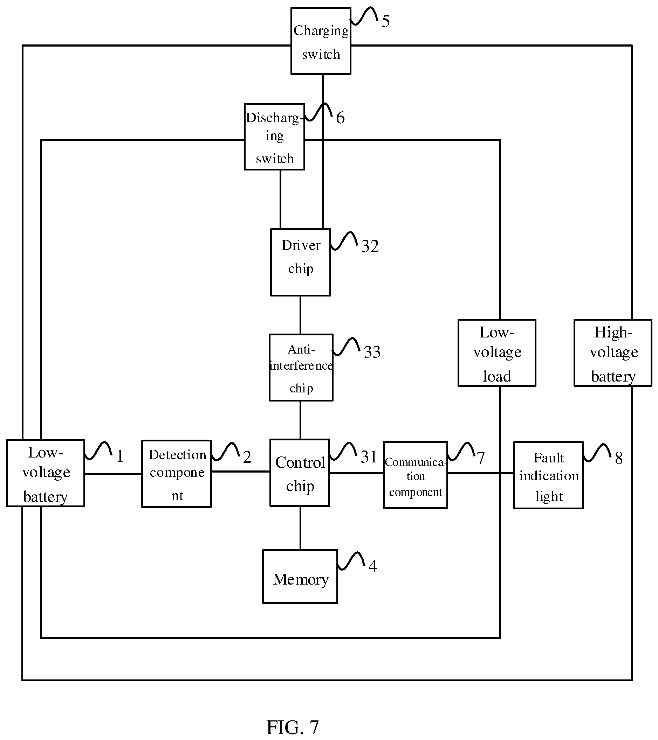

In a possible implementation, the battery management system further includes a communication component 7 and a fault indicator light 8, as shown in FIG. 7. The communication component 7 is electrically connected to the control chip 31 and the fault indicator light 8. The fault indicator light 8 may be mounted on an instrument panel, in response to the state information satisfying the target state condition, the controller 3 sends a target indication signal to the fault indicator light 8 via the communication component 7 to cause the fault indicator light 8 to emit a light signal based on the target indication signal.

In some embodiments of the present disclosure, an independent memory is added, and the storage space of the independent memory may be much larger than the built-in cache of the controller. In this way, the memory can store the fault information corresponding to multiple faults of the low-voltage battery within a period of time, and the state information of the low-voltage battery within this period. During the fault maintenance process, this information can better assist the maintenance personnel in comprehensively identifying each faulty component.

In the description of this specification, references to terms such as "certain embodiments", "an embodiment", "some embodiments", "exemplary embodiments", "examples", "specific examples", or "some examples" indicate that the specific features, structures, materials, or characteristics described in conjunction with the embodiments or examples are included in at least one embodiment or example of the present disclosure. In this specification, the illustrative expressions of the aforementioned terms do not necessarily refer to the same embodiment or example. Furthermore, the specific features, structures, materials, or characteristics described may be combined in any suitable manner in one or more embodiments or examples. Additionally, provided that they do not contradict each other, those skilled in the art may combine and mix different embodiments or examples described in this specification, as well as the features of different embodiments or examples.

It is understandable that in the present disclosure, the term "multiple" refers to two or more, and other quantifiers are similar. The term "And/or" describes the association relationship between associated objects, indicating that there can be three types of relationships. For example, A and/or B can represent three situations: A exists alone, A and B exist simultaneously, and B exists alone. The character "/" generally indicates that the associated objects before and after it are in an "or" relationship. The singular forms of "one kind," "the mentioned," and "the" are also intended to include the plural form, unless the context clearly indicates otherwise.

It can be further understood that terms such as "first," "second," and the like are configured to describe various information, but such information should not be limited to these terms. These terms are only configured to distinguish one type of information from another, and do not indicate a specific order or importance. In fact, expressions such as "first," "second," and the like may be used interchangeably. For example, without departing from the scope of the present disclosure, first information can also be referred to as second information, and similarly, second information can also be referred to as first information.

It can be further understood that the orientations or positional relationships indicated by terms such as "center," "longitudinal," "transverse," "front," "rear," "upper," "lower," "left," "right," "vertical," "horizontal," "top," "bottom," "inner," "outer," "clockwise," "counterclockwise," "axial," "radial," and "circumferential" are based on the orientations or positional relationships shown in the accompanying drawings. These terms are solely configured to facilitate the description of this embodiment and simplify the description, and do not indicate or imply that the devices or components referred to must have specific orientations, be constructed, or operate in a specific orientation.

It can be further understood that unless otherwise explicitly specified and limited, terms such as "installation," "connection," "connection," "fixing" should be broadly understood. For example, it can be a fixed connection, a detachable connection, or an integral molding; it can be a mechanical connection, an electrically connected one, or one that can communicate with each other; it can be a direct connection between two components without any other components in between, or an indirect connection through an intermediary medium; it can be the internal connection of two components or the interaction between two components. For those of ordinary skill in the art, the specific meaning of the above terms in the present disclosure can be understood according to the specific situation.

It can be further understood that although the operations are described in a specific order in the drawings in the embodiments of the present disclosure, it should not be understood as requiring the operations to be performed in the specific order shown or in a serial order, or requiring all the operations shown to be performed to obtain the desired results. In certain environments, multitasking and parallel processing may be advantageous.

After considering the specification and practicing the solutions disclosed herein, those skilled in the technical field will easily conceive of other implementation schemes of the present disclosure. The present disclosure aims to cover any variations, uses, or adaptations of the present disclosure, which follow the general principles of the present disclosure and include common general knowledge or conventional technical means in the technical field not disclosed in the present disclosure. The specification and embodiments are only considered exemplary, and the true scope and spirit of the present disclosure are indicated by the claims.

It should be understood that the present disclosure is not limited to the precise structure described above and shown in the drawings, and various modifications and variations can be made without departing from its scope. The scope of the present disclosure is limited only by the appended claims.

## Claims

1. A battery management system, comprising: a low-voltage battery (1), a detection component (2), a controller (3), a memory (4), a charging switch (5), and a discharging switch (6), wherein
the detection component (2) is electrically connected to the low-voltage battery (1) and the controller (3), and is configured to detect state information of the low-voltage battery (1) and send the state information to the controller (3), wherein the state information comprises current, voltage, and cell temperature;
the charging switch (5) is configured to selectively electrically connect the low-voltage battery (1) and a high-voltage battery;
the discharging switch (6) is configured to selectively electrically connect the low-voltage battery (1) and a low-voltage load; and
the controller (3) is electrically connected to the detection component (2), the memory (4), the charging switch (5), and the discharging switch (6), and is configured to: store the received state information into the memory (4); in response to the state information satisfying a target state condition, determine fault information based on the state information satisfying the target state condition; store the fault information into the memory (4); and control the charging switch (5) and/or the discharging switch (6) based on the fault information.

2. The battery management system according to claim 1, wherein the controller (3) comprises a control chip (31) and a driver chip (32), wherein
the control chip (31) is electrically connected to the driver chip (32) and the detection component (2), and is configured to: store the received state information into the memory (4); in response to the state information satisfying the target state condition, determine the fault information based on the state information satisfying the target state condition; store the fault information into the memory (4); determine a control instruction based on the fault information; and send the control instruction to the driver chip (32); and
the driver chip (32) is electrically connected to the charging switch (5) and the discharging switch (6), and is configured to control the charging switch (5) and/or the discharging switch (6) based on the control instruction.

3. The battery management system according to claim 1, wherein the controller (3) is configured to:
in response to the currently received state information satisfying the target state condition present in a first correspondence between pre-stored state conditions, state information ranges, and fault levels, determine, from the first correspondence, a target fault level corresponding to both the target state condition and a target state information range within which the currently received state information falls;
determine, based on a pre-stored second correspondence between the state conditions and fault types, a target fault type corresponding to the target state condition; and
determine the target fault type and the target fault level as the fault information.

4. The battery management system according to claim 3, wherein the controller (3) is configured to:
in response to the target state condition being that a discharging current is greater than a first discharging current threshold, determine the corresponding target fault type to be a short-circuit fault;
in response to the target state condition being that a total battery voltage is less than a total voltage threshold, determine the corresponding target fault type to be an under-voltage fault;
in response to the target state condition being that a cell voltage to be greater than a cell voltage threshold, determine the corresponding target fault type to be an over-voltage fault;
in response to the target state condition being that the charging current is greater than a charging current threshold, determine the corresponding target fault type to be a charging overcurrent fault;
in response to the target state condition being that the discharging current is greater than a second discharging current threshold, determine that the corresponding target fault type to be a discharging over-current fault, wherein the second discharging current threshold is less than the first discharging current threshold;
in response to the target state condition being that a cell temperature is greater than a cell temperature threshold, determine the corresponding target fault type to be an over-temperature fault; and
in response to the target state condition being that the cell temperature is greater than the cell temperature threshold and a temperature increase rate is continuously greater than a temperature increase rate threshold for a target duration, determine the corresponding target fault type to be a thermal runaway fault.

5. The battery management system according to claim 3, wherein the controller (3) is configured to:
in response to the currently received state information satisfying the target state condition present in the first correspondence between the pre-stored state conditions, state information ranges, fault levels, and detection durations, determine, from the first correspondence, the target fault level and a target detection duration that correspond to both the target state condition and the target state information range within which the currently received state information falls, wherein in the first correspondence, the fault level is negatively correlated with the target detection duration; and
in response to the state information received throughout the target detection duration satisfying the target state condition, determine the target fault type corresponding to the target state condition based on the pre-stored second correspondence between the state conditions and the fault types.

6. The battery management system according to claim 3, wherein the controller (3) is configured to:
based on a third correspondence between the fault types and control instructions, determine a target control instruction corresponding to the target fault type, and control the charging switch (5) and/or the discharging switch (6) based on the target control instruction.

7. The battery management system according to claim 6, wherein the fault types comprise an under-voltage fault, a short-circuit fault, an over-voltage fault, a charging over-current fault, a discharging over-current fault, an over-temperature fault, and a thermal runaway fault; and
the controller (3) is configured to:
in response to the target fault type being the under-voltage fault, determine that the target control instruction is to open the discharging switch (6);
in response to the target fault type being the short-circuit fault, determine that the target control instruction is to open both the charging switch (5) and the discharging switch (6);
in response to the target fault type being the over-voltage fault, determine that the target control instruction is to open the charging switch (5);
in response to the target fault type being the charging overcurrent fault, determine that the target control instruction is to open the charging switch (5);
in response to the target fault type being the discharging overcurrent fault, determine that the target control instruction is to open the discharging switch (6); and
in response to the target fault type being the over-temperature fault or the thermal runaway fault, determine that the target control instruction is to open both the charging switch (5) and the discharging switch (6).

8. The battery management system according to claim 1, further comprising a communication component (7) and a fault indicator light (8), wherein
the communication component (7) is electrically connected to the controller (3) and the fault indicator light (8); and
the controller (3) is further configured to: in response to the state information satisfying the target state condition, send a target indication signal to the fault indicator light (8) via the communication component (7) to cause the fault indicator light (8) to emit a light signal based on the target indication signal.

9. A battery management method, applied to a battery management system comprising a low-voltage battery (1), a detection component (2), a controller (3), a memory (4), a charging switch (5), and a discharging switch (6), wherein the method comprises:
detecting, by the detection component (2), state information of the low-voltage battery (1); and sending, by the detection component (2), the state information to the controller (3), wherein the state information comprises current, voltage, and cell temperature; and
storing, by the controller (3), the received state information into the memory (4); in response to the state information satisfying a target state condition, determining, by the controller (3), fault information based on the state information satisfying the target state condition; storing, by the controller (3), the fault information into the memory (4); and controlling, by the controller (3), the charging switch (5) and/or the discharging switch (6) based on the fault information.

10. The method according to claim 9, wherein in response to the state information satisfying the target state condition, determining, by the controller (3), the fault information based on the state information satisfying the state condition comprises:
in response to the currently received state information satisfying the target state condition present in a first correspondence between pre-stored state conditions, state information ranges, and fault levels, determining, from the first correspondence, a target fault level corresponding to both the target state condition and a target state information range within which the currently received state information falls;
based on a pre-stored second correspondence between the state conditions and fault types, determining a target fault type corresponding to the target state condition; and
determining the target fault type and the target fault level as the fault information.
